(19) **Europäisches Patentamt / European Patent Office / Office européen des brevets**

(11) **EP 4 787 299 A1**

(12) # EUROPEAN PATENT APPLICATION

(43) Date of publication:
05.08.2026 Bulletin 2026/32

(21) Application number: 25196867.3

(22) Date of filing: 19.08.2025

(51) International Patent Classification (IPC):
*G06T 7/00* (2017.01)     *G06T 7/246* (2017.01)

(52) Cooperative Patent Classification (CPC):
**G06T 7/0004; G06T 7/001; G06T 7/251;**
G06T 2207/10016; G06T 2207/30164

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 04.02.2025 IN 202511009156
21.07.2025 US 202519275439

(71) Applicant: **General Electric Company
Evendale, Ohio 45215 (US)**

(72) Inventors:
- **KUMARASWAMY, Ashok
560066 Bengaluru, Karnataka (IN)**
- **MOVVA, Raja Vardhan
560066 Bengaluru, Karnataka (IN)**
- **CHANDRA, Hari Ravi
560066 Bengaluru, Karnataka (IN)**
- **MOVVA, Rajani Bhanu Poornima
560066 Bengaluru, Karnataka (IN)**
- **ALLA, Rajesh
560066 Bengaluru, Karnataka (IN)**

(74) Representative: **Openshaw & Co.
8 Castle Street
Farnham, Surrey GU9 7HR (GB)**

(54) **AUTO-VISUAL DATA PROCESSING AND INSIGHT GENERATION SYSTEMS FOR AIRCRAFT ENGINES**

(57) An auto-visual data processing and insight generation system (100) for an aircraft engine includes a processor (720) and a memory (730) including processor executable instructions that cause the system to: perform video processing on image frames (501, 502), wherein the video processing includes selecting frames of the image frames as key frames based upon feature criteria including a change in pixels, a trend change in graphs, or a specified filter in the frames; perform an extraction of a feature included in the key frames, wherein the feature is extracted from a two-dimensional image to generate a three-dimensional model; identify an insight regarding the feature based on the three-dimensional model to predict performance of a component of the aircraft engine; verify an analytical or physical growth model based on the identified insight; and tune a design of the aircraft engine based on a verification of the analytical or physical growth model.

EP 4 787 299 A1

**Description**

TECHNICAL FIELD

The present disclosure relates to identifying information relating to component failure of aircraft engines. Particularly, the present disclosure relates to a system and a method for auto-visual data processing and insight generation relating to an aircraft engine.

BACKGROUND

There are multiple performance-limiting factors in aircraft engines such as ice accretion, dust accumulation, blade erosion, bird fragmentation, and blade gap clearance, for example, which are challenging to measure during or after testing of a component of such aircraft engines. For example, quantification of ice accretion inside an engine may be challenging to measure due to the ice shedding during operation/shutdown and/or inaccessibility of the component collecting ice mass. Additional challenges arise for an altitude test, where the access to a test cell may include an additional waiting period to bring the pressure to ground level.

BRIEF DESCRIPTION OF THE DRAWINGS

Illustrative embodiments may take form in various components and arrangements of components. Illustrative embodiments are shown in the accompanying drawings, throughout which like reference numerals may indicate corresponding or similar parts in the various drawings. The drawings are only for purposes of illustrating the embodiments and are not to be construed as limiting the disclosure.

FIG. 1 illustrates an auto-visual data processing and insight generation system for an aircraft engine in accordance with aspects of this disclosure;
FIG. 2A is a flow diagram of a method of performing auto-visual data processing, in accordance with aspects of this disclosure;
FIG. 2B is a flow diagram of a method of identifying and measuring features of interest during an operation of the aircraft engine, in accordance with aspects of this disclosure;
FIG. 2C is a flow diagram of a method of identifying and measuring features of interest upon cessation of operation of an engine, in accordance with aspects of this disclosure;
FIG. 2D is a flow diagram of a method of identifying and measuring features of interest for a machine learning model, in accordance with aspects of this disclosure;
FIG. 2E is an example graphical representation of a dynamic rate of change of feature attributes, in accordance with aspects of this disclosure;
FIG. 2F is an example graphical representation of ice parameter accretion data over time, in accordance with aspects of this disclosure;
FIG. 3 is a view illustrating a key frame being identified and selected from a number of frames, in accordance with aspects of this disclosure;
FIG. 4 is a view illustrating a feature extraction over time, in accordance with aspects of this disclosure;
FIG. 5 is a view illustrating a two-dimensional (2D) feature extraction, in accordance with aspects of this disclosure;
FIGS. 6A and 6B are progressive views illustrating 2D to three-dimensional (3D) mapping, in accordance with aspects of this disclosure;
FIGS. 6C-6F are example diagrams of reconstructed 3D ice volumes, in accordance with aspects of this disclosure; and
FIG. 7 illustrates a controller of the auto-visual data processing and insight generation system of FIG. 1 in accordance with aspects of this disclosure.

DETAILED DESCRIPTION

In order to predict component failures, such as engine failure, turbine failure, and the like, various data may need to be measured and analyzed. As mentioned above, there are multiple performance-limiting factors in aircraft engines like ice accretion, dust accumulation, blade erosion, bird fragmentation, blade gap clearance that are either challenging to measure during or after the tests. In the interest of brevity, this application will primarily detail aspects of this disclosure in connection with ice accretion, but the principles detailed herein can also be similarly applied to the other performance limiting factors detailed above or the like (e.g., dust accumulation, blade erosion, bird fragmentation, etc.).

As used herein, ice accretion in aircraft engines refers to the accumulation of ice on engine components caused by the freezing of supercooled water droplets or atmospheric moisture during flight or ground operations. This phenomenon typically occurs in specific environmental conditions, such as temperatures below freezing combined with the presence of liquid water. Ice can form on various parts of the engine, including the air intake, fan and compressor blades, and deeper within the engine core. It may also affect critical sensors, such as pitot tubes and engine pressure ratio (EPR) probes, potentially leading to incorrect readings. Ice accretion can have significant effects on engine performance and safety, including reduced airflow, aerodynamic inefficiencies, mechanical imbalances, and potential damage from shedding ice. In severe cases, ice accretion may result in engine stall or flameout, posing serious risks during flight.

For example, quantification of ice accretion inside the engine may be challenging either due to ice shedding during operation/shutdown and/or inaccessibility of the component that collects ice mass. This may even be more challenging for an altitude test, where the access to the test cell requires a long period of time to bring the pressure to ground level.

The ice mass and dimensions are input for multiple analyses (aero, thermal, operability, dynamics, etc.) in order to assess engine capability and to support certification. These parameters are, in general, analyzed post-test based on test videos either manually or using the algorithms.

Auto-visual data processing and insights generation systems and methods are described herein to mitigate performance limiting factors (e.g., ice accretion) that may affect performance of an aircraft engine (e.g., a gas turbine engine). Specifically, described herein are auto-visual data processing techniques for generating insights regarding performance-limiting factors that affect one or more engine components, wherein the disclosed systems are utilized to enable components to be designed for mitigating such performance limiting factors. The insights generated may include data and/or information on, for example, performance-limiting factors affecting one or more engine components. Such performance-limiting factors may include, for example, ice, dust, and/or snow accretion and/or erosion. The disclosed auto-visual data processing and insights generation systems are configured to determine and/or generate insights by performing post-test image analysis, video analysis, and/or measurement applications during sea-level and/or altitude aircraft engine testing. The insights enable design enhancements such as enhanced rugged blade design, and/or operation controls, such as anti-icing and de-icing systems, active and/or passive doors for bleeds, and/or foreign particle separation. In aspects, the insights can be leveraged for other applications, such as engine blade(s) inspection, defect diagnosis, engine component failure detection, and/or other analyses.

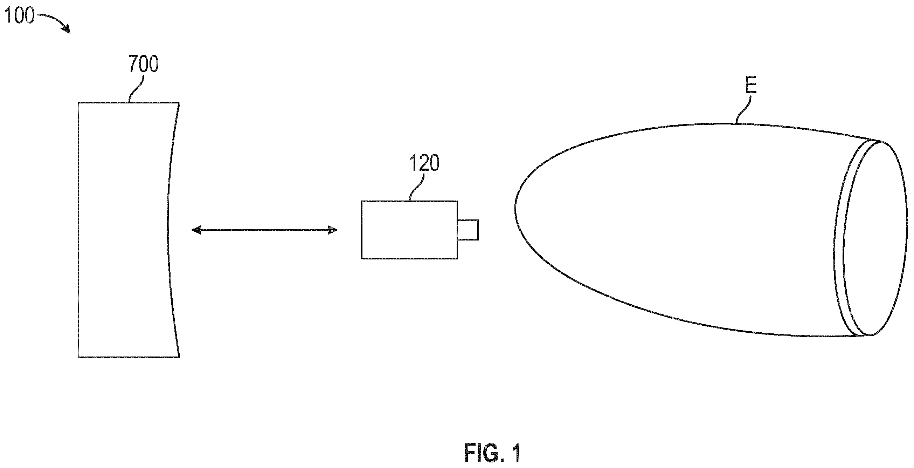

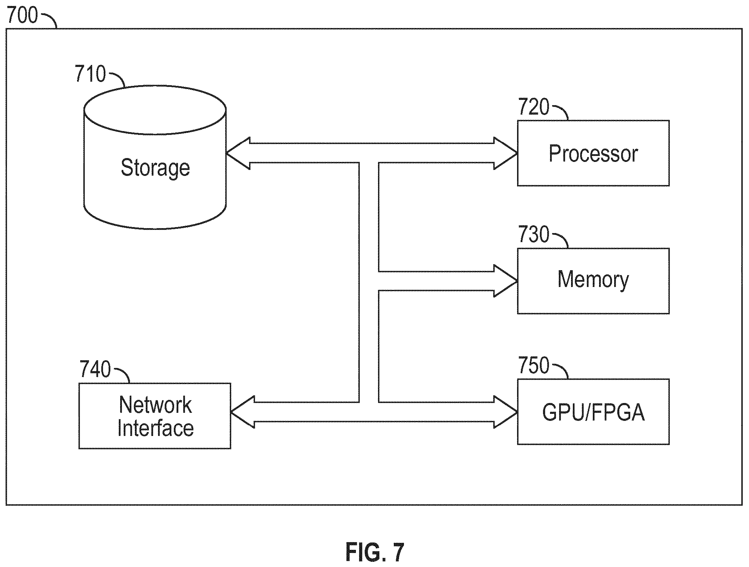

FIG. 1 illustrates an auto-visual data processing and insight generation system 100 in accordance with aspects of this disclosure. The system 100 includes a controller 700, which will be described in greater detail below with respect to FIG. 7. Turning back to FIG. 1, the controller 700 is in communication with an image capturing device (e.g., camera 120), which is configured to capture images of an object such as an aircraft engine E or one or more components thereof.

In various embodiments, the camera 120 is located in any suitable location to capture images of the engine or one or more components thereof, such as a location on or near the engine E. Such images may include one or more images of ice accretion on the engine E. The camera 120 may include a memory to capture and store the images, which can be communicated to (e.g., loaded onto, saved to, etc.) a memory of the controller 700 to enable controller 700 to analyze such captured images.

The camera 120 is configured to capture conditions of one or more components of the engine to identify performance-limiting factors such as ice accretion. The camera 120 is configured to capture the conditions on the engine E via images captured in multiple frames over a period of time, such as during flight. These captured images are then analyzed with computer-implemented algorithms that are configured to determine one or more insights as to these performance-limiting factors (e.g., icing growth rate, shedding cycles, dust deposition on a component, erosion of a component, and/or damage to a component). Based on these insights, system 100 is configured to provide informed decision making (e.g., via data and/or instructions stored on non-transitory memory of controller) for providing design changes of one or more components of the aircraft engine or operation controls of the aircraft engine that may be implemented to mitigate these performance-limiting factors.

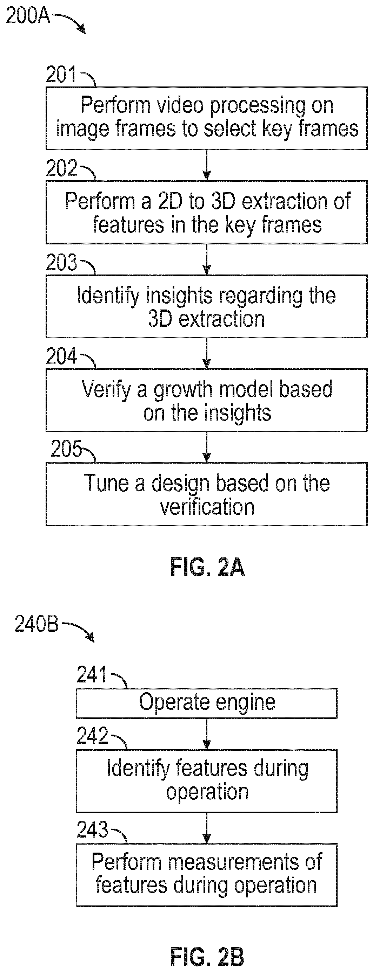

Referring also to FIG. 2A, a flow diagram of a method 200A of performing auto-visual data processing is provided. At block 201, for example, intelligent video processing is performed. Intelligent video processing may be performed on frames of images captured by the camera 120 (FIG. 1) to select key frames, for example, as during flight operations of the aircraft engine. Intelligent video processing may include processing that is later used to capture insights generated from video and may make a repository of such insights. A filter can be utilized to organize such insights or images, e.g., to select the key frames. In various embodiments, specified features may be extracted from such images and/or insights based on an output such as change in growth rate (e.g., of icing/cracking) or a shedding frequency (e.g., icing shedding). Icing cracking refers to the process where ice that has formed on a surface fractures or breaks apart due to mechanical stress, thermal expansion, or external forces. In the context of aviation and aircraft engines, icing cracking is often associated with the breaking or shedding of ice that has accreted on engine components or other surfaces of the aircraft. Icing shedding refers to the detachment or release of accumulated ice from surfaces, such as those on an aircraft engine or airframe. This process can occur naturally due to aerodynamic forces, vibration, thermal changes, or as a result of anti-icing and de-icing systems actively removing the ice.

At block 201, duplicate frames may be eliminated and dynamic logic may be utilized to extract frames selectively with respect to rate change. For example, for an icing blockage analysis (e.g., icing blockage refers to the obstruction of critical airflow paths, fluid lines, or mechanical components caused by the accumulation of ice), the frame with maximum annotated features is analyzed, and, for shedding frequency insights, the frame with minimum annotated features is analyzed. Multiple insights related to physics can be generated using an algorithm that can be further used in verifying and optimizing existing theoretical models, for example, ice growth rate, ice shed mass, impingement locations, and so on.

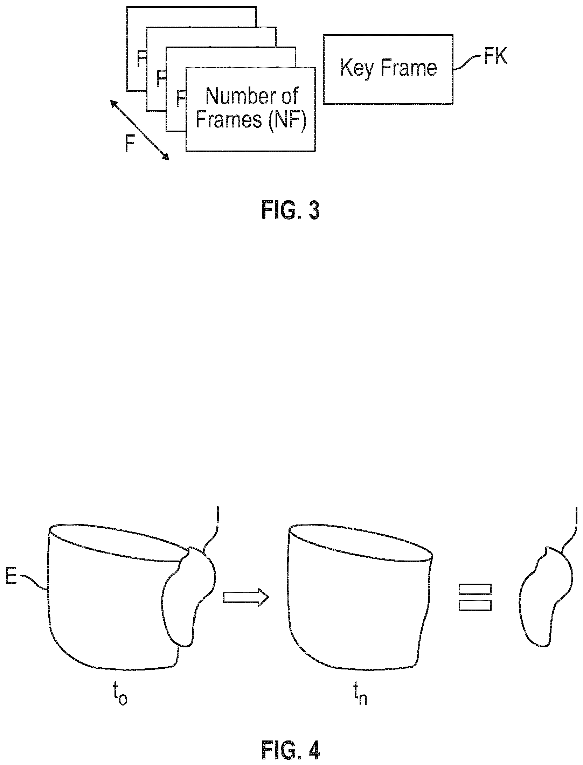

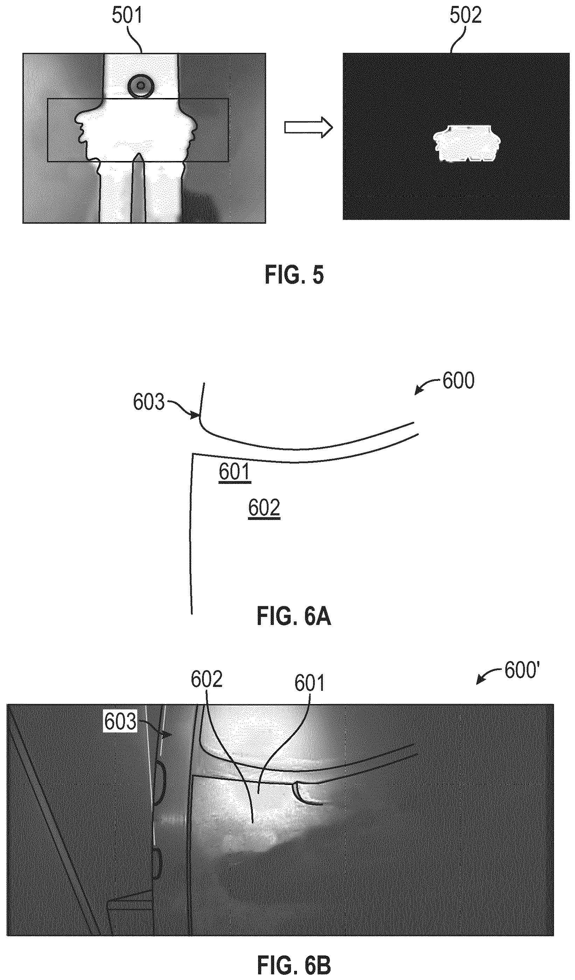

As shown in FIG. 3, in various embodiments, a number of frames (NF) may be captured by the camera 120. Camera 120 is configured to capture various frames, including ice accretion frames and residual value frames. Ice accretion frames capture the overall icing region on the component. Residual value frames highlight and/or enhance features indicating residue embedded within and/or on the ice. A key frame/frame of interest Fk may be extracted by the controller 700 (e.g., by a graphics processing analysis) while using image processing and image frame comparison techniques. For example, with respect to icing, frames that include ice accretion in the image may be extracted, while frames that do not show ice accretion may be discarded. In another example, frames with a maximum annotated area of ice may be extracted. Additionally, duplicate frames may be discarded. Key features such as ice regions and residue regions may be identified using feature criteria extracted using feature extraction techniques (see, e.g., FIGS. 4 and 5). In another example, a frame related to a time of interest may be extracted based on an engine parameter analysis (e.g., a time of a drop in compressor exit temperature, which is caused by and indicative of a shed, may be extracted and analyzed for ice shed mass and/or velocity).

A threshold may be utilized to determine whether a frame is a key frame (e.g., frame of interest). For example, in various embodiments, the frames may be captured in time order. As each frame is compared to a previous frame as a reference, the frame may be extracted if the frame includes, for example, ice accretion, or some other feature of interest, and the amount of the feature of interest (e.g., amount of residue) exceeds a threshold determined, for instance, based on an amount captured in the previous frame (e.g., frame reference). In aspects, controller 700 is configured to count a number of pixels classified as a region of interest (e.g., an ice region and/or a residue region) using feature extraction techniques (FIGS. 4 and 5). For example, within a segmented portion of a frame, the pixels classified as a region of interest may be converted into a proportion of the total segmented portion of the frame (e.g., controller 700 determines that residue occupies 25% of an ice region, which is then compared to a threshold). In aspects, for the maximum ice accretion frame, the maximum residual value frame is selected and for shedding, the minimum residual value frame is selected.

In various embodiments, where the residue amount does exceed the threshold, it may be determined whether or not the slope of the residual trend is changing. That is, with respect to the example of ice accretion, it may be determined whether or not an amount of ice is increasing or decreasing from the previous frame (e.g., reference frame) in addition to whether the ice accretion increase/decrease exceeds the threshold from the reference frame.

These frames may be binned then for further analysis. Accordingly, in various embodiments, the output frames may be utilized for filtering certain view frames from Borescope Inspection Videos (BIVs), e.g., video recordings and/or live feeds captured using a borescope, in order to visually examine the interior of narrow spaces within a component disassembling machinery or structures. For example, the output frames may detail ice formation and help isolate sections of BIVs where performance-limiting factors can persist. In various embodiments, the frame with maximum/minimum/defined key feature observation may be filtered, and different views may be utilized.

FIG. 4 is a view illustrating a feature extraction over time, in accordance with one embodiment. For example, in the context of block 201 (FIG. 2A), an engine E (FIG. 1) includes a feature (ice accretion I) at time $t_0$. At time $t_n$, ice accretion may not be present. Accordingly, the ice accretion I may be compared against a threshold and if the threshold is exceeded, the frame including engine E at time $t_n$ may be extracted for analysis. Accordingly, insights may be determined as to the rate of ice accretion, the ice shed frequency and patterns, and any sticking/erosion rate on the engine E over time. In various embodiments, the insights may include ice thickness, area, particle diameters, distribution of particles, and/or the number of particles. In various embodiments, the particles could be super-cooled droplets, ice crystals, snow, dust, etc., but are not limited to any specific type.

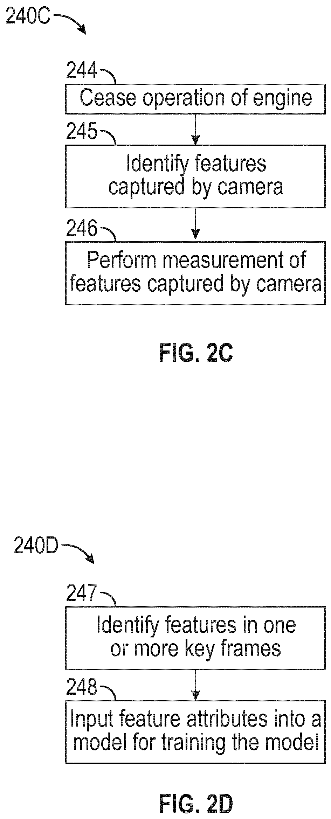

With continued reference to FIG. 2A, at block 202, dimension extraction is performed, specifically, a 2D to 3D extraction of features in the key frames. The dimension extraction, in various embodiments, may include semi-automatic/interactive extraction capability based on key attributes appearing dynamically in the current frame with respect to the reference frame. The reference frames may be input pixel level features provided manually or interactively prior to the extraction, such that the key frames are processed and extracted by comparison with reference frames from a video. For example, a set of pixels along the leading edge of components and/or along boundaries of vanes/flow paths in an image are detected. In another example, residue regions are detected based on key features (e.g., feature criteria) indicative of residue based on a trained model and/or database. Key features that may be extracted may include dimensions (e.g., length, width, depth, thickness, area, volume, and/or mass), changes in pixels (e.g., calculated differences in pixels), changing trends in graphs (FIG. 2C) (e.g., growth rate, sticking/erosion rate, and/or decay rate), specified filters in one or more frames, and/or known functions. To detect a change in size of a feature from a first frame to a second frame, for example, feature criteria may include a difference in pixels, a growth rate, a decay rate, a known function, and/or various filters. For example, the pixel representation information of an object is used to extract the dimensions using a combination of various algorithms (e.g., customized) like edge detection, frame subtraction, morphological operations, etc.

FIG. 5 is a view illustrating an example of a two-dimensional (2D) feature extraction. Indeed, a feature shown in frame 501 is extracted to frame 502 as explained above. Additional information about the extracted feature, such as a length and/or a width of the feature may also be extracted from the frame 501.

Once feature extraction is performed, a 2D to 3D extraction may be performed at block 202. In various embodiments, key features points selection on the 2D image with references from a computer aided drafting (CAD) model algorithm may be used for orienting and resizing the 2D image onto the 3D CAD model or using CAD camera perspective view to match with that of 2D image. In various embodiments, the selection is of reference points from the 2D image that correspond to similar points in the 3D CAD model.

In various embodiments, a prediction of a projection matrix with reduced re-projection error may be utilized based on iterative reference points selection. In various embodiments, the projection matrix may be in accordance with the following:

$$P = K*R|t,$$

P is the projection matrix, which maps a 3D coordinate system of aircraft engines to 2D image pixel coordinates. K is the intrinsic matrix, which includes aircraft engine-mounted camera parameters, such as focal length, optical center, and/or field of view. R and t matrices provide the orientation and position, respectively, of the aircraft engine-mounted camera relative to the aircraft engine coordinate system. In aspects, the projection matrix may be configured to map a 3D coordinate system of test rigs and/or other objects and/or aircraft engine components. Evaluation of this projection matrix is crucial for various applications, such as 3D reconstruction of engine view images into CAD models, foreign object particle analysis (e.g., analysis of ice, dust, and/or snow), engine blades inspections, and/or defect diagnosis applications.

The image may further be resized in various embodiments to allow easier inspection. The camera projection matrix is further used in converting 2D image coordinates to 3D world coordinates to further build a 3D model in CAD, for example using resizing algorithms which may be known to persons of skill in the art.

The dimension extraction using, for example, methods described above, can be applied on videos/images acquired through an inspection camera (e.g., Single fixed/BSI). The auto-created collage/mosaic image of the component enables viewing the entire component in one place and identification of whether any portions were missed for analysis. The camera projection matrix built in each view is used to convert the 2D single image to 3D world coordinates and these coordinates are further stitched together in the CAD model for building 3D model to obtain 3D dimensions. Information/data that may be usefully extracted may include, in various embodiments, the ice mass, dimensions, dust deposition, and/or the like. In various embodiments, a series of points may be obtained in each view. These points may be stitched together using multiple geometric modeling methods like surface creation from points, splines, curves, etc.

FIGS. 6A and 6B are progressive views illustrating 2D to 3D mapping. FIG. 6A depicts a 2D image (e.g., a 2D CAD image) 600. The 2D image 600 includes various feature points/portions (e.g., points of an engine) such as a portion 601 and 602 (e.g., any suitable engine feature such as a fan blade, turbine, nozzle, shaft, nacelle, etc.). A point of interest (e.g., a crack/icing) may occur at point 603. CAD image reference points may be used to obtain a camera projection matrix to facilitate 2D to 3D mapping of the features like ice accumulation, dust deposition, foreign object (bird/dust/ice/hail, etc.) impact locations and so on.

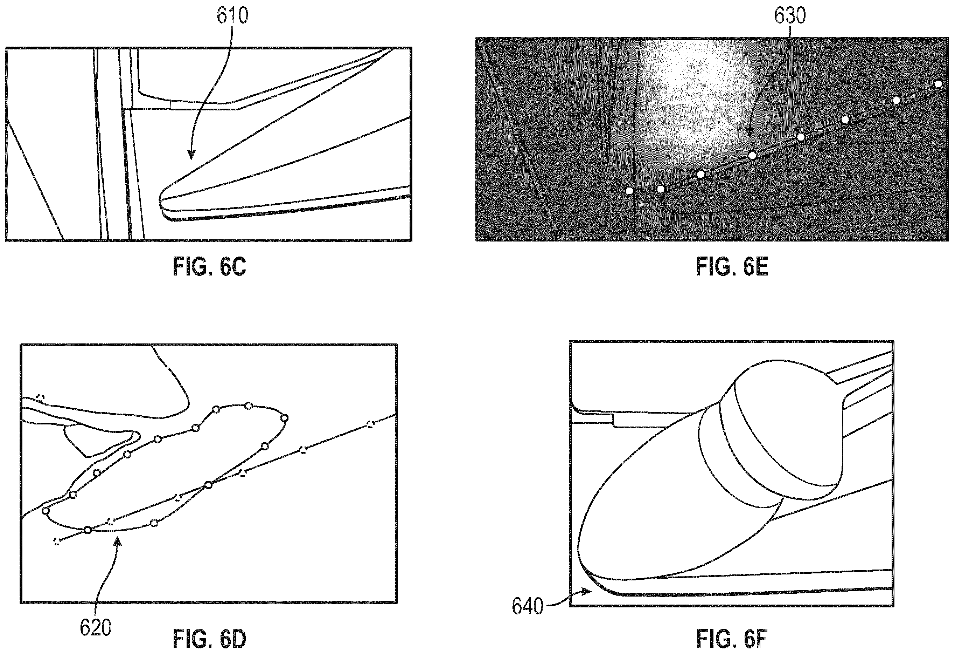

FIGS. 6C-6F are example diagrams of a reconstructed 3D ice volume, in accordance with one embodiment. As shown in FIG. 6C, a 2D ice section area estimation 610 is obtained using key features in the 2D image and CAD reference points mapping.

As shown in FIG. 6D, 2D points are cloud mapped onto a CAD model footprint location 620 and 2D points are projected and mapped to the CAD model. In various embodiments, the CAD references are used to reconstruct the 3D volume. In this example, a rotation axis and plane of rotation are obtained on the CAD model (e.g., a vane span or casing flow path).

As shown in FIG. 6E, in this example, a 3D volume creation 630 is provided. 2D image points are converted to 3D world coordinates using a camera projection matrix and the converted 3D points are used to regenerate the volume to build up an ice volume representation. Accordingly, as shown in FIG. 6F, a final ice volume 640 (e.g., rotated ice volume) is shown having an intersection with an ice rotated volume.

In various embodiments, the 2D image 600 may be represented and mapped as a 3D image 600' as depicted in FIG. 6B.

In various embodiments, the 2D to 3D mapping may provide better ability to perform measurements. For example, mapping the 2D image to a 3D image (or model) provides a non-dimensional and projected image. That is, an object that is 10cm away or a km away may be shown as similar in size to aid in measurement and analysis in the image, and by projecting, for example, a crack may be shown more accurately in a 3D image as being on a curved surface, as opposed to showing as a straight line in a 2D image. In various embodiments, known reference points may be used (original component) between the 3D and 2D to determine the original 3D dimensions, and then applied for newly appeared features (such as cracks) in the image.

Referring again to FIG. 2A, at block 203, insights are identified regarding the 3D extraction, specifically, interactive features are identified and insights are generated. For example, in various embodiments, the interactive feature identification may provide real-time monitoring of test videos to optimize the test execution and reduce the subjectivity in post-processing. By generating the insights above, decisions regarding, for example, the design of an engine component or allowable operational parameters of the engine, optimization of the component test plans, controls operation may be made based on a post icing analysis. For example, manual assessment involves interactive calculations, which involve subjective determinations. In various embodiments, the insight generation described above may reduce errors in extracting attributes.

Turning now to FIG. 2B, which is a flow diagram of a method 240B of identifying and measuring one or more features of interest during an operation of an engine, in accordance with one embodiment. At block 241, an engine is operating in an operating state (e.g., ground idle, flight idle, take off, etc.). At block 242, the one or more features are identified during operation of the engine in the operating state via camera 120. The features identified during operation are generally from images, videos, and/or measurement graphs/parameters from a dashboard. For example, because a compressor exit temperature drop typically indicates a performance change (e.g., performance change due to ice shed or stall/surge), the temperature drop can be further utilized to understand the ice shed mass based on existing internal analytical correlations. At block 243, measurements of the one or more features are performed during operation of the engine in the operating state. Graphical or pictorial images during operation for components or parameters like temperature, pressure, flow rates, vibrations and so on are some of the features which can be identified during operation. These can be detected using feature detection techniques with reference to standard templates.

In various embodiments, the method 240B may be a live measurement (e.g., during operation). For example, features and/or insights other than the original designed component features that appear during a test may be measured. These insights are viewable while the test is happening, and an operator can make real-time decisions on test parameters. For example, the size of icing may be measured, since it is transient (e.g., will melt shortly after test stops). In another example, an ability to calculate/compensate for camera view and projection related distortions may be utilized during a live measurement to determine a true length of a crack.

FIG. 2C is a flow diagram of a method 240C of identifying and measuring features of interest upon cessation of operation of an engine. At block 244, operation of an engine is ceased. For example, an engine that was in operation during flight is powered down upon the aircraft returning. The features like reduction in compressor exit temperature beyond certain limits indicate the ice sheds. The image analysis of the graphs is, in turn, used in comparing with existing analytical correlations for temperature drop and/or shed ice mass quantities and are used further in analyzing the next engine cycles or the damage incurred. For example, the image analysis of the graphs may extract anomalies and/or trends, e.g., a significant reduction in compressor exit temperature that correlates with ice shedding, then quantify a mass of the ice shed using existing analytical correlations. The insights extracted are then utilized to analyze engine cycles and damage. For example, insights may be used to determine performance trends in engine cycles, such as signs of residual effects from ice shedding, by identifying similar changes in temperature that might indicate engine issues. In another example, insights may be used to perform damage assessment, such as identifying physical damage to blades and/or compressors, by using diagnostic algorithms refined by the insights to identify vibration anomalies, imbalances, and/or material fatigue.

At block 245 shown in FIG. 2C, features and/or insights are captured by the camera, and at block 246, measurements of the features and/or insights captured by the camera are performed. For example, at block 245, the camera captures images of icing that formed.

In various embodiments, method 240C includes processing performed offline and may be used to tune/improve existing analytics models, such as machine learning models described below, to better predict field events before they occur. An analytic growth model and/or a physical growth model to predict failure may be tuned to more effectively to determine when a failure may occur. As used herein, an analytical growth model is a model generally used for trend analysis, reliability predictions, and/or risk assessment and a physical growth model is a model generally used for physics-based insights into specific failure mechanisms, enabling more accurate predictions and deeper understanding of the underlying processes. For example, an analytical growth model may be used to assess reliability and/or predict failure of components in an aircraft engine. In another example, a physical growth model may be used to predict how a crack grows over time based on stress cycles, material properties, and/or initial defect sizes.

FIG. 2D is a flow diagram of a method 240D of identifying and measuring features of interest for a machine learning model. At block 247, features and/or insights are identified in one or more key frames. For example, as discussed above, ice accretion may be identified. At block 248, attributes from the features are input into a model (e.g., machine learning model) for training the model. For example, the training models could be accretion mass or shed mass (e.g., the mass of ice that has accumulated on a surface or the mass of ice detached from it), shed frequency (e.g., the rate or interval at which ice is dislodged from a surface), shed impact velocity (e.g., the speed at which detached ice impacts another surface or object), shed trajectory (e.g., the path taken by detached ice as it moves through space after shedding), and/or shed location.

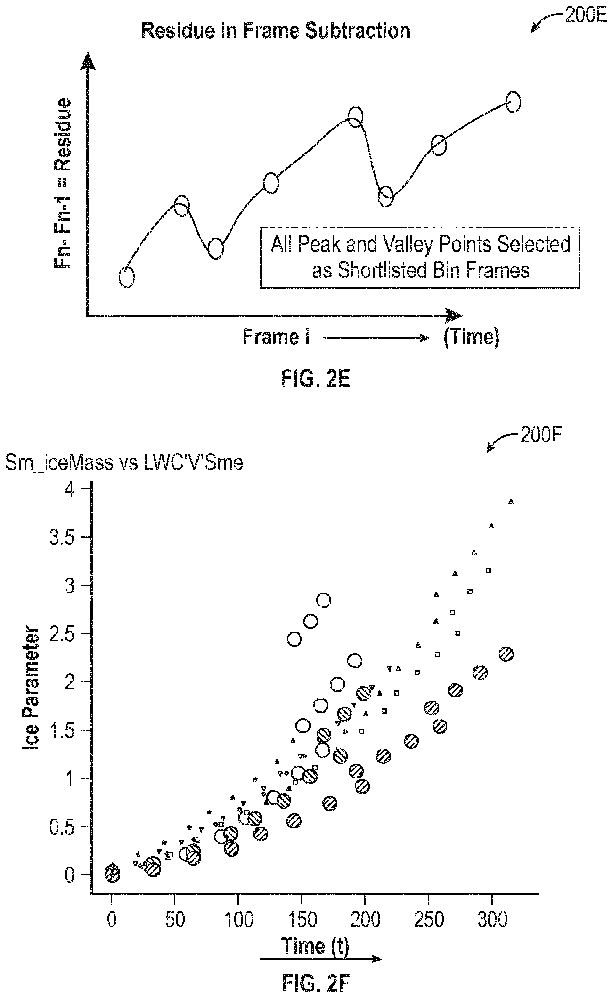

FIG. 2E is an example graphical representation of a dynamic rate of change of feature attributes 200E, in accordance with one embodiment. As shown in FIG. 2E, ice residue varies from frame to frame (e.g., Frame i) over time. The rate of change of the attributes provides insights, in various embodiments. For example, peaks and valleys may be selected as "short list" insights for bin frames as key frames. Each time, the drop in the slope represents the shed characteristic of the ice and the corresponding insights are generated to further use them in analytical models. While here, an ice growth rate example is provided, the same image processing algorithm can be used for all other analysis parameters.

FIG. 2F is an example graphical representation of an ice parameter over time 200F, in accordance with one embodiment. As shown in FIG. 2F, ice parameter data is collected as a function of time. In various embodiments, a delta of measurements may be assessed for modeling. The insights generated using the algorithms mentioned above (e.g., methods 240D and 240E) can be further used in fine-tuning analytical models. Thus, if a new trend and/or a threshold for failure is analyzed from new test data, existing correlations can be fine-tuned using the new trends. For example, if ice growth rate on a heated surface is analyzed, then internal analytical correlation coefficients for growth rate can be corrected. FIG. 2F illustrates an example of implementing image algorithm based processing to improve analytical models. For example, a convolutional neural network (CNN) used for image segmentation and classification may be fine-tuned with additional regression layers for accretion mass, shed mass, and/or velocity, and additional classification layers for shedding events and/or failure prediction. Using the insights provided by methods 240D and 240E, the CNN may continuously update with new data, improving accuracy over time.

In various embodiments, method 240D may include a theoretical model optimization. That is, in various embodiments, based on theory and equations, theoretical models for impingement, accretion, shed, and other features are created and used for simulating various scenarios that can occur in the field and/or improve engine design based on these scenarios. The digital information obtained (e.g., using a process described above) from the key-frames is used, in various embodiments, to optimize the theoretical models (e.g., make them match the field behavior more closely). For example, internal theoretical model tuning may be used for ice shed threshold speed and for mechanisms through multiple ice shed video analyses. In various embodiments, persons of skill in the art may understand how to optimize theoretical models. In addition, optimizing the theoretical models may in-turn help to improve engine design such as designing more ruggedized blades to take ice impact, reduced ice adhesion area, etc.

Referring again to FIG. 2A, at block 204, a growth model is verified based on the identified insights. An analytical growth model and/or a physical growth model may be verified. For example, the models depicted in FIGS. 2E, 2F may be verified by evaluating accuracy, reliability, and/or relevance to the auto-visual data processing and insight generation system 100. For example, the models may be repeatedly verified using engine and/or component test measurements. The verification process typically includes data-driven validation, theoretical consistency checks, and domain expert reviews.

At block 205, an action is taken based on the verified growth model(s). For example, a design of a portion of the aircraft engine is tuned based on a verification of the analytical growth model or the physical growth model. In another example, the analytic growth model and/or physical growth model may be further tuned to predict failure may be tuned to more effectively to determine when a failure may occur.

FIG. 7 is a block diagram of a controller 700 of the system of FIG. 1, in accordance with one embodiment. Exemplary components in the controller 700 in accordance with aspects of the present disclosure include, for example, a storage (e.g., a database 710), one or more processors 720, at least one memory 730, and a network interface 740. In aspects, the controller 700 may include a graphical processing unit (GPU)/field programmable gate array (FPGA) 750, which may be used for processing machine learning network models. Various components of controller 700 may be utilized to carry out instructions to perform, for example, the operations described in blocks 201-205 of FIG. 2A, blocks 241-243 of FIG. 2B, blocks 244-246 of FIG. 2C, and/or blocks 247 and 248 of FIG. 2D. Further, controller 700 may include communication circuitry capable of wired or wireless communication to receive data from other devices, such as camera 120.

Database 710 can be located in storage. The term "storage" may refer to any device or material from which information may be capable of being accessed, reproduced, and/or held in an electromagnetic or optical form for access by a computer processor. Storage may be, for example, volatile memory such as RAM, non-volatile memory, which permanently holds digital data until purposely erased, such as flash memory, magnetic devices such as hard disk drives, and optical media such as a CD, DVD, Blu-ray Disc™, or the like.

In various aspects, data may be stored on controller 700, including, for example, user preferences, historical data, and/or other data. The data can be stored in database 710 and sent via the system bus to processor 720.

As described above, processor 720 may execute various processes based on instructions that can be stored in the server memory 730 and utilizing the data from database 710. With reference also to FIG. 1, a request from a user device, such as a mobile device or a client computer, can be communicated to the server through the server's network interface 740. The illustration of FIG. 7 is exemplary, and persons skilled in the art will be understood by other components that may exist in the controller 700. Such other components are not illustrated in FIG. 7 for clarity of illustration.

In various embodiments, the above methods may be utilized to improve design of engines, for example designing a more rugged blade, controls to activate anti-icing/de-icing systems, active or passive doors for bleeds, foreign particle separations, etc.

The phrases "in an aspect," "in aspects," "in various aspects," "in some aspects," or "in other aspects" may each refer to one or more of the same or different aspects in accordance with this disclosure.

Additional disclosure is found in the subject matter of the following clauses.

A system for auto-visual data processing and insight generation system for an aircraft engine includes a processor and a memory including instructions which, when executed by the processor, cause the system at least to: perform video processing on image frames, wherein the video processing includes selecting one or more frames of the image frames as one or more key frames based upon feature criteria including one or more of a change in pixels, a trend change in graphs, or a specified filter in the one or more frames; perform an extraction of a feature included in the one or more key frames, wherein the feature is extracted from a two-dimensional image to generate a three-dimensional model; identify an insight regarding the feature based on the three-dimensional model to predict performance of a component of the aircraft engine; verify at least one of an analytical growth model or a physical growth model based on the identified insight; and tune a design of at least a portion of the aircraft engine based on a verification of the at least one of the analytical growth model or the physical growth model.

The system according to the preceding clause, wherein the feature criteria further include a change of a size of the feature from a first frame to a second frame including one or more of a difference in pixels, a growth rate, a decay rate, a known function, or a filter.

The system according to any preceding clause, wherein the change in size of the feature is represented by a change in slope or analytical function of a graphical representation of the feature.

The system according to any preceding clause, further including the aircraft engine, wherein when the aircraft engine is in an operating state, the system identifies the insight to predict component performance and measures the feature in the three-dimensional model.

The system according to any preceding clause, wherein the feature includes an amount of ice accretion on the component of the aircraft engine.

The system according to any preceding clause, wherein the system measures the amount of ice accretion on the component of the aircraft engine in a first key frame of the one or more key frames and compares the amount of ice accretion on the component in the first key frame to an amount of icing on the component of the aircraft engine in a second key frame of the one or more key frames.

The system according to any preceding clause, wherein the feature includes an amount of cracking on the component of the aircraft engine.

The system according to any preceding clause, wherein the system measures the amount of cracking on the component in a first key frame of the one or more key frames and compares the amount of cracking on the component in the first key frame to an amount of cracking on the component of the aircraft engine in a second key frame of the one or more key frames, and wherein such measurement includes at least one of a length, width, thickness, or depth of at least a portion of a crack on the component.

The system according to any preceding clause, wherein the system identifies the insight upon a cessation of an operation of the aircraft engine.

The system according to any preceding clause, wherein the system inputs an attribute regarding the feature into a machine learning model configured to improve an accuracy of performance analytics, and wherein the instructions, when executed by the processor, further cause the system at least to activate at least one of an anti-icing or a de-icing system to prevent or limit ice accretion on the aircraft engine.

A processor-implemented method for auto-visual data processing and insights generation in an aircraft engine includes: performing video processing on image frames, wherein the video processing includes selecting one or more frames of the image frames as one or more key frames based upon feature criteria including one or more of a change in pixels, a trend change in graphs, or a specified filter in the one or more frames; performing an extraction of a feature included in the one or more key frames from the one or more key frames, wherein the feature is extracted from a two-dimensional image to generate a three-dimensional model; identifying an insight regarding the feature based on the three-dimensional model to predict performance of a component of the aircraft engine; verifying at least one of an analytical growth model or a physical growth model based on the identified insight; and tuning a design of at least a portion of the aircraft engine based on a verification of the at least one of the analytical growth model or the physical growth model.

The processor implemented method according to the preceding clause, wherein the feature criteria further include a change of a size of the feature from a first frame to a second frame including one or more of a difference in pixels, a growth rate, a decay rate, a known function, or a filter.

The processor implemented method according to any preceding clause, wherein the change in size of the feature is represented by a change in slope or analytical function of a graphical representation of the feature.

The processor implemented method according to any preceding clause, further including when the aircraft engine is in an operating state, identifying the insight to predict component performance and measures the feature in the three-dimensional model.

The processor implemented method according to any preceding clause, wherein the feature includes an amount of ice accretion on the component of the aircraft engine.

The processor implemented method according to any preceding clause, wherein the method measures the amount of ice accretion on the component of the aircraft engine in a first key frame of the one or more key frames and compares the amount of ice accretion on the component in the first key frame to an amount of icing on the component of the aircraft engine in a second key frame of the one or more key frames.

The processor implemented method according to any preceding clause, wherein the feature includes an amount of cracking on the component of the aircraft engine.

The processor implemented method according to any preceding clause, wherein the method measures the amount of cracking on the component in a first key frame of the one or more key frames and compares the amount of cracking on the component in the first key frame to an amount of cracking on the component of the aircraft engine in a second key frame of the one or more key frames, and wherein such measurement includes at least one of a length, width, thickness, or depth of at least a portion of a crack on the component.

The processor implemented method according to any preceding clause, wherein the method identifies the insight upon a cessation of an operation of the aircraft engine.

The processor implemented method according to any preceding clause, wherein the method inputs an attribute regarding the feature into a machine learning model configured to improve an accuracy of performance analytics, and wherein the method further includes activating at least one of an anti-icing or a de-icing system to prevent or limit ice accretion on the aircraft engine.

An auto-visual data processing and insight generation system for an aircraft engine, the system comprising: a processor; a memory including instructions which, when executed by the processor, cause the system at least to: perform video processing on image frames, wherein the video processing includes selecting one or more frames of the image frames as one or more key frames based upon feature criteria including one or more of a change in pixels, a trend change in graphs, or a specified filter in the one or more frames; perform an extraction of a feature included in the one or more key frames, wherein the feature is extracted from a two-dimensional image to generate a three-dimensional model; identify an insight regarding the feature based on the three-dimensional model to predict performance of a component of the aircraft engine; verify at least one of an analytical growth model or a physical growth model based on the identified insight; and tune a design of at least a portion of the aircraft engine based on a verification of the at least one of the analytical growth model or the physical growth model.

The system of any preceding clause, wherein the feature criteria further include a change of a size of the feature from a first frame to a second frame including one or more of a difference in pixels, a growth rate, a decay rate, a known function, or a filter.

The system of any preceding clause, wherein the change in size of the feature is represented by a change in slope or analytical function of a graphical representation of the feature.

The system of any preceding clause, further comprising the aircraft engine, wherein when the aircraft engine is in an operating state, the system identifies the insight to predict component performance and measures the feature in the three-dimensional model.

The system of any preceding clause, wherein the feature includes an amount of ice accretion on the component of the aircraft engine.

The system of any preceding clause, wherein the system measures the amount of ice accretion on the component of the aircraft engine in a first key frame of the one or more key frames and compares the amount of ice accretion on the component in the first key frame to an amount of icing on the component of the aircraft engine in a second key frame of the one or more key frames.

The system of any preceding clause, wherein the feature includes an amount of cracking on the component of the aircraft engine.

The system of any preceding clause, wherein the system measures the amount of cracking on the component in a first key frame of the one or more key frames and compares the amount of cracking on the component in the first key frame to an amount of cracking on the component of the aircraft engine in a second key frame of the one or more key frames, and wherein such measurement includes at least one of a length, width, thickness, or depth of at least a portion of a crack on the component.

The system of any preceding clause, wherein the system identifies the insight upon a cessation of an operation of the aircraft engine.

The system of any preceding clause, wherein the system inputs an attribute regarding the feature into a machine learning model configured to improve an accuracy of performance analytics, and wherein the instructions, when executed by the processor, further cause the system at least to: activate at least one of an anti-icing or a de-icing system to prevent or limit ice accretion on the aircraft engine.

A processor-implemented method for auto-visual data processing and insights generation in an aircraft engine, the method comprising: performing video processing on image frames, wherein the video processing includes selecting one or more frames of the image frames as one or more key frames based upon feature criteria including one or more of a change in pixels, a trend change in graphs, or a specified filter in the one or more frames; performing an extraction of a feature included in the one or more key frames from the one or more key frames, wherein the feature is extracted from a two-dimensional image to generate a three-dimensional model; identifying an insight regarding the feature based on the three-dimensional model to predict performance of a component of the aircraft engine; verifying at least one of an analytical growth model or a physical growth model based on the identified insight; and tuning a design of at least a portion of the aircraft engine based on a verification of the at least one of the analytical growth model or the physical growth model.

The processor-implemented method of any preceding clause, wherein the feature criteria further include a change of a size of the feature from a first frame to a second frame including one or more of a difference in pixels, a growth rate, a decay rate, a known function, or a filter.

The processor-implemented method of any preceding clause, wherein the change in size of the feature is represented by a change in slope or analytical function of a graphical representation of the feature.

The processor-implemented method of any preceding clause, further comprising when the aircraft engine is in an operating state, identifying the insight to predict component performance and measures the feature in the three-dimensional model.

The processor-implemented method of any preceding clause, wherein the feature includes an amount of ice accretion on the component of the aircraft engine.

The processor-implemented method of any preceding clause, wherein the method measures the amount of ice accretion on the component of the aircraft engine in a first key frame of the one or more key frames and compares the amount of ice accretion on the component in the first key frame to an amount of icing on the component of the aircraft engine in a second key frame of the one or more key frames.

The processor-implemented method of any preceding clause, wherein the feature includes an amount of cracking on the component of the aircraft engine.

The processor-implemented method of any preceding clause, wherein the method measures the amount of cracking on the component in a first key frame of the one or more key frames and compares the amount of cracking on the component in the first key frame to an amount of cracking on the component of the aircraft engine in a second key frame of the one or more key frames, and wherein such measurement includes at least one of a length, width, thickness, or depth of at least a portion of a crack on the component.

The processor-implemented method of any preceding clause, wherein the method identifies the insight upon a cessation of an operation of the aircraft engine.

The processor-implemented method of any preceding clause, wherein the method inputs an attribute regarding the feature into a machine learning model configured to improve an accuracy of performance analytics, and wherein the method further comprises: activating at least one of an anti-icing or a de-icing system to prevent or limit ice accretion on the aircraft engine.

Persons skilled in the art will understand that the structures and methods specifically described herein and illustrated in the accompanying figures are non-limiting exemplary aspects, and that the description, disclosure, and figures should be construed merely as exemplary of aspects. It is to be understood, therefore, that the present disclosure is not limited to the precise aspects described, and that various other changes and modifications may be effected by one skilled in the art without departing from the scope or spirit of the disclosure. Additionally, it is envisioned that the elements and features illustrated or described in connection with one exemplary aspect may be combined with the elements and features of another without departing from the scope of the present disclosure, and that such modifications and variations are also intended to be included within the scope of the present disclosure. Indeed, any combination of any of the presently disclosed elements and features is within the scope of the present disclosure. Accordingly, the subject matter of the present disclosure is not to be limited by what has been particularly shown and described.

## Claims

1. An auto-visual data processing and insight generation system (100) for an aircraft engine, the system (100) comprising:

   a processor (720);
   a memory (730) including instructions which, when executed by the processor (720), cause the system at least to:

   perform video processing on image frames (501, 502), wherein the video processing includes selecting one or more frames of the image frames as one or more key frames based upon feature criteria including one or more of a change in pixels, a trend change in graphs, or a specified filter in the one or more frames;
   perform an extraction of a feature included in the one or more key frames, wherein the feature is extracted from a two-dimensional image to generate a three-dimensional model;
   identify an insight regarding the feature based on the three-dimensional model to predict performance of a component of the aircraft engine;
   verify at least one of an analytical growth model or a physical growth model based on the identified insight; and
   tune a design of at least a portion (601, 602) of the aircraft engine based on a verification of the at least one of the analytical growth model or the physical growth model.

2. The system (100) of claim 1, wherein the feature criteria further include a change of a size of the feature from a first frame (501, 502) to a second frame (501, 502) including one or more of a difference in pixels, a growth rate, a decay rate, a known function, or a filter.

3. The system (100) of claim 2, wherein the change in size of the feature is represented by a change in slope or analytical function of a graphical representation of the feature.

4. The system (100) of any of the preceding claims, further comprising the aircraft engine, wherein when the aircraft engine is in an operating state, the system (100) identifies the insight to predict component performance and measures the feature in the three-dimensional model.

5. The system (100) of any of the preceding claims, wherein the feature includes an amount of ice accretion on the component of the aircraft engine.

6. The system (100) of any of the preceding claims, wherein the system (100) measures the amount of ice accretion on the component of the aircraft engine in a first key frame of the one or more key frames and compares the amount of ice accretion on the component in the first key frame to an amount of icing on the component of the aircraft engine in a second key frame of the one or more key frames.

7. The system (100) of any of the preceding claims, wherein the feature includes an amount of cracking on the component of the aircraft engine.

8. The system (100) of any of the preceding claims, wherein the system (100) measures the amount of cracking on the component in a first key frame of the one or more key frames and compares the amount of cracking on the component in the first key frame to an amount of cracking on the component of the aircraft engine in a second key frame of the one or more key frames, and wherein such measurement includes at least one of a length, width, thickness, or depth of at least a portion (601, 602) of a crack on the component.

9. The system (100) of any of the preceding claims, wherein the system (100) identifies the insight upon a cessation of an operation of the aircraft engine.

10. The system (100) of any of the preceding claims, wherein the system (100) inputs an attribute regarding the feature into a machine learning model configured to improve an accuracy of performance analytics, and wherein the instructions, when executed by the processor (720), further cause the system (100) at least to:
 activate at least one of an anti-icing or a de-icing system (100) to prevent or limit ice accretion on the aircraft engine.

11. A processor-implemented method for auto-visual data processing and insights generation in an aircraft engine, the method comprising:

 performing video processing on image frames (501, 502), wherein the video processing includes selecting one or more frames of the image frames (501, 502) as one or more key frames based upon feature criteria including one or more of a change in pixels, a trend change in graphs, or a specified filter in the one or more frames;
 performing an extraction of a feature included in the one or more key frames from the one or more key frames, wherein the feature is extracted from a two-dimensional image (600) to generate a three-dimensional model;
 identifying an insight regarding the feature based on the three-dimensional model to predict performance of a component of the aircraft engine;
 verifying at least one of an analytical growth model or a physical growth model based on the identified insight; and
 tuning a design of at least a portion (601, 602) of the aircraft engine based on a verification of the at least one of the analytical growth model or the physical growth model.

12. The processor-implemented method of claim 11, wherein the feature criteria further include a change of a size of the feature from a first frame (501, 502) to a second frame (501, 502) including one or more of a difference in pixels, a growth rate, a decay rate, a known function, or a filter.

13. The processor-implemented method of claim 12, wherein the change in size of the feature is represented by a change in slope or analytical function of a graphical representation of the feature.

14. The processor-implemented method of any of claims 11 to 13, further comprising when the aircraft engine is in an operating state, identifying the insight to predict component performance and measures the feature in the three-dimensional model.

15. The processor-implemented method of any of claims 11 to 14, wherein the feature includes an amount of

**EP 4 787 299 A1**

ice accretion on the component of the aircraft engine.

FIG. 1

200A

201
Perform video processing on image frames to select key frames

202
Perform a 2D to 3D extraction of features in the key frames

203
Identify insights regarding the 3D extraction

204
Verify a growth model based on the insights

205
Tune a design based on the verification

**FIG. 2A**

240B

241
Operate engine

242
Identify features during operation

243
Perform measurements of features during operation

**FIG. 2B**

240C

244
Cease operation of engine

245
Identify features
captured by camera

246
Perform measurement of
features captured by camera

**FIG. 2C**

240D

247
Identify features in one
or more key frames

248
Input feature attributes into a
model for training the model

**FIG. 2D**

## Residue in Frame Subtraction

200E

All Peak and Valley Points Selected
as Shortlisted Bin Frames

Frame i ——————➤ (Time)

## FIG. 2E

Sm_iceMass vs LWC'V'Sme

200F

## FIG. 2F

FIG. 3

FIG. 4

501

502

**FIG. 5**

600

603

601

602

**FIG. 6A**

600'

602    601

603

**FIG. 6B**

FIG. 6C

FIG. 6E

FIG. 6D

FIG. 6F

**FIG. 7**

Europäisches
Patentamt
European
Patent Office
Office européen
des brevets

# EUROPEAN SEARCH REPORT

Application Number

EP 25 19 6867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/217155 A1 (BOLISETTI S V RAJ KUMAR [IN] ET AL) 15 July 2021 (2021-07-15) * paragraph [0029] - paragraph [0043] * ----- | 1-15 | INV. G06T7/00 G06T7/246 |
| A | US 2019/338666 A1 (FINN ALAN MATTHEW [US] ET AL) 7 November 2019 (2019-11-07) * paragraph [0030] - paragraph [0056] * ----- | 1-15 | |
| A | US 2018/002039 A1 (FINN ALAN MATTHEW [US] ET AL) 4 January 2018 (2018-01-04) * paragraph [0020] - paragraph [0038] * ----- | 1-15 | |

TECHNICAL FIELDS
SEARCHED (IPC)

G06T

The present search report has been drawn up for all claims

| Place of search | Date of completion of the search | Examiner |
|---|---|---|
| Munich | 22 October 2025 | Üreyen, Soner |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

22-10-2025

| Patent document cited in search report | Publication date | Patent family member(s) | Publication date |
|---|---|---|---|
| US 2021217155 A1 | 15-07-2021 | CN 113205479 A<br>EP 3852059 A1<br>SG 10202100437W A<br>US 2021217155 A1 | 03-08-2021<br>21-07-2021<br>30-08-2021<br>15-07-2021 |
| US 2019338666 A1 | 07-11-2019 | NONE | |
| US 2018002039 A1 | 04-01-2018 | EP 3264341 A1<br>SG 10201704896P A<br>US 2018002039 A1 | 03-01-2018<br>27-02-2018<br>04-01-2018 |